**Europäisches Patentamt**

**European Patent Office**

**Office européen des brevets**

(11) Veröffentlichungsnummer: **0 224 226**
A2

## (12) EUROPÄISCHE PATENTANMELDUNG

(21) Anmeldenummer: 86116221.2

(22) Anmeldetag: 22.11.86

(51) Int. Cl.4: **B07C 3/12** , G06K 19/06 , G06K 7/08

(30) Priorität: 26.11.85 DE 3541676

(43) Veröffentlichungstag der Anmeldung:
03.06.87 Patentblatt 87/23

(84) Benannte Vertragsstaaten:
CH FR GB IT LI NL SE

(71) Anmelder: Euchner & Co.
Kohlhammerstrasse 16
D-7022 Leinfelden-Echterdingen(DE)
0

(72) Erfinder: Rapp, Werner, Dipl.-Ing. (FH)
Südmährer Strasse 26
D-7340 Geislingen(DE)

(74) Vertreter: Patentanwälte Phys. Bartels
Dipl.-Ing. Fink Dr.-Ing. Held
Lange Strasse 51
D-7000 Stuttgart 1(DE)

(54) Identifikationssystem.

(57)

1. Identifikationssystem

2. Ein System zur Kennzeichnung und Identifizierung von Gegenständen, insbesondere in Fertigungsprozessen benötigten Arbeitsmitteln wie Werkzeugen und Werkstückträgern, hat eine elektronisch lesbare Kennzeichnung aufweisende Module (4), die an den zu kennzeichnenden Gegenständen (1) anzuordnen sind, sowie eine Auswerteeinrichtung mit wenigstens einem die Kennzeichnung zu lesen vermögenden Aufnehmer. Jeder Modul enthält wenigstens einen Schwingkreis (5, 6, 7) zur Erzeugung einer für ihn kennzeichnenden Resonanzfrequenz oder Resonanzfrequenzkombination. Es ist eine der Anzahl der unterschiedlichen Elemente des gewählten Kennzeichnungscodes entsprechende Anzahl unterschiedlicher Resonanzfrequenzen oder Resonanzfrequenzkombinationen vorgesehen, und die Resonanzfrequenz oder Resonanzfrequenzkombination jedes Moduls (4) ist entsprechend einer dieser Frequenzen od. Frequenzkombinationen gewählt. Die am Gegenstand (1) festzulegenden Module (4) sind entsprechend den für die Darstellung der Kennzeichnung des Gegenstandes (1) im gewählten Code erforderlichen Elementen ausgewählt und angeordnet.

# Fig.2

## Indentifikationssystem

Die Erfindung betrifft ein System zur Kennzeichnung und Identifizierung von Gegenständen, insbesondere in Fertigungsprozessen benötigten Arbeitsmitteln wie Werkzeugen und Werkstückträgern, mit eine elektronisch lesbare Kennzeichnung aufweisenden Modulen, die an den zu kennzeichnenden Gegenständen anzuordnen sind, und einer Auswerteeinrichtung mit wenigstens einem die Kennzeichnung zu lesen vermögenden Aufnehmer, wobei jeder Modul wenigstens einen Schwingkreis zur Erzeugung einer für ihn kennzeichnenden Resonanzfrequenz oder Resonanzfrequenzkombination enthält.

Bei bekannten, zur Kennzeichnung von Werkzeugen und Paletten in vollautomatisch arbeitenden Fertigungsanlagen entwickelten Systemen enthalten die Module einen vom Anwender progammierbaren oder einen programmierten Speicher, also beispielsweise ein handelsübliches EPROM, in dem die Kennzeichnung in dem gewählten Code gespeichert ist. Ferner weist der Modul Kontakte auf, die von Gegenkontakten des Aufnehmers kontaktiert werden müssen, um die im Speicher abgelegte Kennzeichnung auslesen zu können. Vor allem dann, wenn für die Unterbringung des Moduls wenig Platz zur Verfügung steht, wie es vielfach bei Werkzeugen der Fall ist, da hier zur Aufnahme des Moduls nur eine Ausnehmung des Schaftes in Frage kommt, sind diese Module teuer. Außerdem ist die Herstellung der Verbindung zwischen dem Modul und dem Aufnehmer schwierig, was die Arbeitsgeschwindigkeit und die Betriebssicherheit beeinträchtigt. Weiterhin erfordern diese Module bei einer Programmierung durch den Anwender entsprechende Fachkenntnisse und Einrichtungen, die häufig nicht vorhanden sind, weshalb in vielen Fällen nur die Lösung der vom Hersteller programmierten Module übrig bleibt, die jedoch teuer ist und infolge der Verwechslungsgefahr zu falschen Kennzeichnungen führen kann.

Zur Identifizierung von mobilen Werkstückträgern ist es ferner bekannt, jeden Werkstückträger mit einem Modul zu versehen, der einen oder mehrere elektrische Schwingkreise enthält. Durch seine Resonanzfrequenz oder Resonanzfrequenzen-Kombination unterscheidet sich jeder dieser Module von den übrigen Modulen. Man kann daher den Werkstückträger identifizieren, wenn man seinen Modul an stationären Sensoren vorbeiführt, welche die Resonanzfrequenz oder Resonanzfrequenzen-Kombination abtastet. Vor allem bei einer relativ großen Anzahl unterschiedlich zu kennzeichnender Gegenstände bedingt ein derartiges Identifikationssystem einen großen Aufwand. Außerdem ist die Gefahr falscher Zuordnungen bei der Bestückung der Gegenstände mit den unterschiedlichen Modulen groß.

Der Erfindung liegt daher die Aufgabe zugrunde, ein System der eingangs genannten Art zu schaffen, das nicht nur einen so geringen Raumbedarf hat, daß es ohne Schwierigkeiten auch für Werkzeuge verwendbar ist, sondern das auch kostengünstig sowie störunanfällig ist und für seinen Einsatz keine besonderen Fachkenntnisse erforderlich macht. Diese Aufgabe löst ein System mit den Merkmalen des Anspruches 1.

Dadurch, daß nur zehn verschiedene, den Ziffern 0 bis 9 zugeordnete Module benötigt werden, wird der Aufwand sowohl bei der Herstellung als auch bei der Lagerhaltung erheblich reduziert. Ferner lassen sich Fehler bei der Zuordnung der Module zu den Gegenständen praktisch vollständig ausschließen, weil die Kennzeichnung der Module mit der sie repräsentierenden Ziffer eine Verwechslung unmöglich macht und eine optische Kontrolle nach der Anbringung am Gegenstand jederzeit erlaubt.

Die Kennzeichnung eines Gegenstandes erfolgt mit erfindungsgemäßen Modulen in der Weise, daß an dem zu kennzeichnenden Gegenstand diejenigen Module in der durch den gewählten Code vorgesehenen Anordnung angebracht werden, deren Resonanzfrequenz oder Resonanzfrequenzkombination die Bedeutung der die Kennzeichnung bildenden Codeelemente hat. Ist beispielsweise die Kennzeichnung eine dreistellige Zahl im Dezimalsystem, dann werden diejenigen Module ausgewählt und mit der richtigen Stellenzuordnung am Gegenstand festgelegt, die den erforderlichen Ziffern entsprechen. Man benötigt also in diesem Falle Module mit zehn verschiedenen Resonanzfrequenzen oder Resonanzfrequenzkombinationen, welche den Ziffern 0 bis 9 zugeordnet sind. Ensprechend läßt sich jeder andere Code mit der erforderlichen Anzahl unterschiedlicher Module realisieren. Zur Identifikation eines Gegenstandes, also zum Lesen einer Codierung, braucht nur die Frequenz oder Frequenzkombination ermittelt zu werden, welche die Resonanzfrequenz oder Resonanzfrequenzen des Moduls darstellt, wobei sowohl eine serielle als auch eine parallele Abfrage in Frage kommt. Hierzu wird mittels des Aufnehmers ein elektromagnetisches Wechselfeld erzeugt, das je nachdem, welche Frequenz oder Frequenzen es enthält, den Schwingkreis des Moduls zum Schwingen bringt oder nicht. Aufgrund dieser Reaktion läßt sich die Resonanzfrequenz oder Resonanzfrequenzkombination des Moduls als Basis für die Identifizierung des Gegenstandes erkennen.

Vor allem dann, wenn die erfindungsgemäßen Module nur einen einzigen Schwingkreis bilden und deshalb nur aus einer Spule und einem Kondensator bestehen zu brauchen, lassen sich die Module ohne Schwierigkeiten mit so geringen Abmessungen herstellen, daß ihr Platzbedarf selbst dann klein ist, wenn die Kennzeichnung aus mehreren Modulen gebildet werden muß. Da sowohl Spulen als auch Kondensatoren kostengünstige Elemente sind und sonstige Bauteile einschließlich Steckkontakte und eine Batterie nicht benötigt werden, sind die Module konstengünstig und betriebssicher. Weiterhin benötigt der Anwender keine Fachkenntnisse, weil er die Module nur entsprechend ihrer Bedeutung, also beispielsweise beim Dezimalsystem entsprechend ihrem Ziffernwert, auszuwählen und stellenrichtig anzuordnen braucht, was in einfacher Weise dadurch erleichtert werden kann, daß man jeden Modul mit einem seine Bedeutung kennzeichnenden Symbol, beispielsweise der durch ihn repräsentierten Ziffer oder des durch ihn repräsentierten Buchstabens, zu versehen braucht.

Die Festlegung der Module an dem zu kennzeichnenden Gegenstand kann natürlich in jeder geeigneten Weise erfolgen. Vorteilhaft ist jedoch ein Träger gemäß Anspruch 3, bei dem es sich allerdings auch um einen Teil des Gegenstandes handeln kann. So braucht man beispielsweise den Schaft eines Werkzeuges nur mittels in Schaftquerrichtung verlaufender Sacklochbohrung zu versehen, um in diese die für die Kennzeichnung erforderlichen Module ohne Schwierigkeiten einsetzen zu können. Die Festlegung in den Vertiefungen ist ebenfalls in beliebiger Weise möglich, beispielsweise durch Einschrauben oder Einkleben. Sofern die Platzverhältnisse dies zulassen und das Material, aus dem der Träger besteht, magnetisch leitend ist, kann man auch beispielsweise jeden Modul mit einem ihn am Träger festhaltenden Permanentmagnet ausrüsten.

Bei einer bevorzugten Ausführungsform haben die Module die Form von Abschnitten eines geradlinigen Stabes. Sie lassen sich dann besonders einfach in Bohrungen oder bohrungsartige Vertiefungen einsetzen. Ebenso ist es vorteilhaft, wenn alle Module eine gleiche Form und eine gleiche Größe haben, da dann die Vertiefungen ebenfalls gleich ausgebildet sein können.

Im Hinblick auf einen möglichst geringen Raumbedarf der Module ist es vorteilhaft, wenn diese einen zylindrischen Spulenkern mit einer konzentrischen Ringnut in der einen Stirnfläche für die Aufnahme der Wicklung enthalten. Zur Verwirklichung des Schwingkreises ist dann nur noch ein Kondensator erforderlich, der an die Spule angeschlossen ist.

Zur Vereinfachung der Handhabung der Module, zu deren Schutz und zu einer möglichst einfachen Verbindung mit dem Träger können die Module je ein Gehäuse aufweisen, das auch die Stirnflächen des Moduls bedecken kann.

Die Erzeugung des elektromagnetischen Wechselfeldes zur Anregung des Schwingkreises des abzufragenden Moduls und das Erkennen des Schwingens dieses Schwingkreises kann mittels verschiedener Spulen im Aufnehmer erfolgen, wobei mehrere Module nacheinander oder aber auch gleichzeitig mittels je einer Anregungs-und Abfrageeinrichtung abgefragt werden können. Man kann aber auch mit ein und derselben Spule im Aufnehmer zunächst das den Modul anregende Feld erzeugen und dann diese Spule von einem Frequenzgenerator auf eine Auswerteelektronik umschalten, welche die in der Spule infolge des Schwingens des Schwingkreises im Modul induzierte Spannung auswertet.

Für die Abfrage der Module kann man den Frequenzgenerator so ausbilden, daß er nacheinander diejenigen Frequenzen erzeugt, die in den unterschiedlichen Modulen als Resonanzfrequenzen realisiert sind. Der Frequenzgenerator kann aber auch so ausgebildet sein, daß er die Frequenz kontinuierlich über den gesamten Bereich verändert, in dem die Resonanzfrequenzen der Module liegen. In beiden Fällen kann beim Erreichen der Resonanzfrequenz eine weitere Frequenzänderung ausgeschlossen werden. Mann kann aber auch einen Impuls erzeugen, welcher sämtliche Resonanzfrequenzen der Module enthält. Dann muß allerdings bei der Auswertung der vom Modul induzierten Signale die Frequenzbestimmung zur Identifikation durchgeführt werden, was allerdings mit bekannten elektronischen Mitteln keine Schwierigkeiten bereitet.

Im folgenden ist anhand von zwei in der Zeichnung dargestellten Ausführungsbeispielen im einzelnen erläutert. Es zeigen

Fig. 1 eine Ansicht eines Bohrers mit einer dreistelligen Kennzeichnung im Schaft mittels einer ersten Ausführungsform der erfindungsgemäßen Module,

Fig. 2 einen vergrößert dargestellten Schnitt nach der Linie II-II der Fig. 1,

Fig. 3 eine Stirnansicht des Moduls,

Fig. 4 eine schematische und unvollständige Darstellung des die Module enthaltenden Schaftes und des die Abfrage zum Zwecke der Idenfizierung ermöglichenden Aufnehmers,

Fig. 5 einen Längsschnitt eines abgewandelten Moduls.

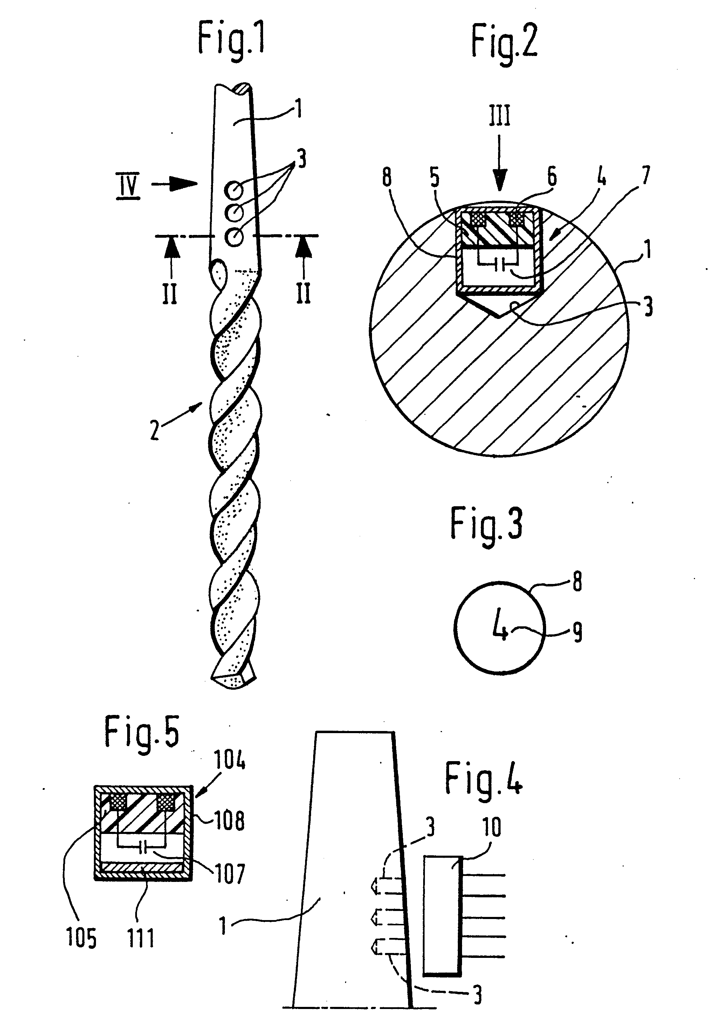

Der Schaft 1 eines Werkzeuges, bei dem sich im Ausführungsbeispiel um einem Bohrer 2 handelt, ist mit drei in Schaftlängsrichtung im Abstand voneinander angeordneten, in den Schaft 1 in radialer Richtung eindringenden Sacklochbohrungen 3 versehen, die der Aufnahme je eines als Ganzes mit 4 bezeichneten Moduls dienen. Jeder der in seinen Abmessungen gleich ausgebildeten Module 4 enthält, wie Figur 2 zeigt, einen zylindrischen Ferritkern 5, in den von seiner einen Stirnfläche her eine konzentrisch angeordnete Ringnut eindringt. In dieser Ringnut liegt eine Spule 6, deren Wicklungsenden zu einem Kondensator 7 geführt und mit diesem verbunden sind, welcher neben dem Ferritkern 5 auf der der Ringnut abgekehrten Seite angeordnet ist, wie dies in Figur 2 symbolisch durch das Schaltbild des Kondensators 7 angedeutet ist.

Da im Ausführungsbeispiel die Kennzeichnung der identifizierbaren Gegenstände mittels einer dreistelligen Zahl im Dezimalsystem erfolgen soll, bilden die Module 4 zehn Gruppen mit unterschiedlichen Resonanzfrequenzen, die durch die Verwendung von Kondensatoren 7 unterschiedlichen Kapazitätswertes verwirklicht sind. Die einzelnen Gruppen von Modulen 4 sind dabei den Ziffern 0 bis 9 zugeordnet.

Zum Schutze des Ferritkernes 5, der Spule 6 und des Kondensators 7 sind diese Bauteile in einem zylindrischen Kunststoffgehäuse 8 angeordnet, das auch stirnseitig verschlossen ist. Das Gehäuse 8 ist in seinem Außendurchmesser und seiner Länge an die Sacklochbohrungen 3 angepaßt. Die eine Stirnseite des Gehäuses 8, vorzugsweise die im eingebauten Zustand nach außen weisende Stirnseite, trägt diejenige Ziffer als Kennzeichnungssymbol 9, der die Resonanzfrequenz dieses Moduls 4 entspricht.

Soll der Bohrer 2 beispielsweise mit der Dezimalzahl 430 gekennzeichnet werden, dann werden in die Sacklochbohrungen 3 in entsprechender Reihenfolge diejenigen Module 4 eingesetzt, die die Ziffern 4, 3 und 0 als Kennzeichnungssymbol tragen. Etwas Klebstoff hält die Gehäuse 8 in der in Figur 2 dargestellten, vollständig eingesetzten Position.

Für eine Identifizierung des Bohrers 2 wird auf die Sacklochbohrungen 3 ein Aufnehmer 10 einer Auswerteeinrichtung ausgerichtet. In Figur 4 sind nur die zu der Auswerteeinrichtung führenden Verbindungsleitungen hergestellt, nicht aber die Auswerteeinrichtungen, da diese in bekannter Weise ausgebildet sein kann. Der Aufnehmer enthält im Ausführungsbeispiel drei Spulen, die je ein elektromagnetisches Wechselfeld erzeugen, das gegen den zugeordneten Modul gerichtet ist. Würde der Aufnehmer 10 nur eine dieser Spulen enthalten, dann müßte diese nacheinander auf die drei Module 4 ausgerichtet werden. Die Aufnehmer sind im Wechsel an einem Frequenzgenerator der Auswerteeinrichtung und eine Auswerteelektronik anschließbar. Für die Abfrage der Module 4 erzeugt der Frequenzgenerator zunächst einen Impuls, der alle zehn unterschiedliche Resonanzfrequenzen enthält. Das hierdurch erzeugte elektromagnetische Wechselfeld der drei Spulen bringt die Schwingkreise der Module 4 ihrer Resonanzfrequenz zum schwingen. Am Ende dieses Impulses werden die drei Spulen automatisch auf je eine Frequenzbestimmungsstufe der Auswerteelektronik umgeschaltet. Diese Frequenzbestimmungsstufen ermitteln die Frequenz der in der zugeordneten Spule aufgrund der Schwingung des angekoppelten Schwingkreises erzeugten Spannung. Aufgrund dieser Frequenzen erkennt die Auswerteelektronik die das Kennzeichen bildende Zahl, im Ausführungsbeispiel also die Zahl 430.

Sofern es erforderlich ist, die Kennzeichnung des Bohrers 2 zu ändern, brauchen nur die nicht mehr zu gebrauchenden Module durch andere ersetzt zu werden.

Wie Figur 5 zeigt, kann jeder Modul 104 einen Permanentmagneten 111 enthalten, der im Ausführungsbeispiel ebenso wie der Ferritkern 105 die Form einer zylindrischen Scheibe hat. Zweckmäßigerweise ist der Kondensator 107 zwischen dem in gleicher Weise wie der Ferritkern 5 ausgebildete Ferritkern 105 und dem Permanentmagneten 111 angeordnet, der ebenso wie die übrigen Bauelemente im Inneren des Kunststoffgehäuses 108 liegt. Der Permanentmagnet 111 hält den Modul 104 beispielsweise in der ihn aufnehmenden Bohrung, so daß andere Mittel zur Festlegung des Moduls entbehrlich sind.

Alle in der vorstehenden Beschreibung erwähnten sowie auch die nur allein aus der Zeichnung entnehmbaren Merkmale sind als weitere Ausgestaltungen Bestandteile der Erfindung, auch wenn sie nicht besonders hervorgehoben und insbesondere nicht in den Ansprüchen erwähnt sind.

## Ansprüche

1. System zur Kennzeichnung und Identifizierung von Gegenständen, insbesondere in Fertigungsprozessen benötigten Arbeitsmitteln wie Werkzeugen und Werkzeugträgern, mit eine elektronisch lesbare Kennzeichnung aufweisenden Modulen, die an den zu kennzeichnenden Gegenständen anzuordnen sind, und einer Auswerteeinrichtung mit wenigstens einem die Kennzeichnung zu lesen vermögenden Aufnehmer, wobei jeder Modul wenigstens einen Schwingkreis zur Erzeugung einer für ihn kennzeichnenden Reso-nanzfrequenz oder Resonanzfrequenzkombinatio-nen enthält, dadurch gekennzeichnet, daß

a) zehn Gruppen von Modulen (4; 104) unterschiedlicher Resonanzfrequenz oder Resonanzfrequenzkombination vorgesehen sind, wobei jede dieser Gruppen eine der Ziffern 0 bis 9 zugeordnet ist,

b) die am Gegenstand (1) festzulegenden Module (4; 104) entsprechend der für die Kennzeichnung des Gegenstandes (1) gewählten Zahl ausgewählt und angeordnet sind und

c) jeder Modul (4; 104) auf seiner Oberfläche mit einem für eine Person lesbaren Symbol in Form der durch ihn repräsentierten Ziffer versehen ist.

2. System nach Anspruch 1, dadurch gekennzeichnet, daß zur Aufnahme der für eine Kennzeichnung erforderlichen Module (4; 104) ein Träger (1) mit in einer Reihe angeordneten Vertiefungen, insbesondere Bohrungen (3), vorgesehen ist.

3. System nach Anspruch 2, dadurch gekennzeichnet, daß der Träger (1) durch einen Teil des Gegenstandes (2) gebildet ist.

4. System nach einem der Ansprüche 1 bis 3, dadurch gekennzeichnet, daß die Module (4; 104) die Form von Abschnitten eines geradlinigen Stabes haben.

5. System nach Anspruch 4, dadurch gekennzeichnet, daß alle Module (4; 104) gleiche Form und gleiche Größe haben.

6. System nach einem der Ansprüche 1 bis 5, dadurch gekennzeichnet, daß jeder Modul (4; 104) einen zylindrischen Spulenkern (5; 105) mit einer konzentrischen Ringnut in der einen Stirnfläche und eine in dieser Ringnut liegende Spule (6) sowie einen an diese Spule (6) angeschlossenen Kondensator (7; 107) enthält.

7. System nach Anspruch 6, dadurch gekennzeichnet, daß der Spulenkern (105) den einen und ein Permanentmagnet (111) den anderen Endabschnitt des Moduls (104) bilden.

8. System nach einem der Ansprüche 2 bis 7, dadurch gekennzeichnet, daß die Module (4; 104) ein vorzugsweise an die Form der Vertiefungen (3) angepaßtes Gehäuse (8; 108) haben.

9. System nach einem der Ansprüche 1 bis 8, dadurch gekennzeichnet, daß der Aufnehmer (10) wenigstens eine Spule enthält, die vorzugsweise im Wechsel an einen Frequenzgenerator und eine Auswerteelektronik anschließbar ist.

10. System nach Anspruch 9, dadurch gekennzeichnet, daß der Frequenzgenerator eine sich kontinuierlich ändernde Frequenz, eine sich stufenweise ändernde Frequenz oder einen alle Reso-nanzfrequenzen enthaltenden Impuls erzeugt.

# Fig.1

1

3

IV →

II        II

2

# Fig.2

III
↓

8    5    6    4    7

1

3

# Fig.3

8

4

9

# Fig.5

104

108

107

105    111

# Fig.4

3    10

1

3